# FASCICULE DE BREVET EUROPEEN

(11) **EP 2 101 280 B1**
(45) Date de publication et mention de la délivrance du brevet: **17.12.2014**
(21) Numéro de dépôt: 09154699.4
(22) Date de dépôt: 10.03.2009
(51) Int. Cl.: G06K 7/08

(54) **Terminal de paiement électronique comprenant un lecteur magnétique à fente latérale**
Zahlungsendgerät mit einem seitlichen Schlitz versehenen magnetischen Lesegerät
Payment terminal with a magnetic reader having a lateral slit

(30) Priorité: 11.03.2008 FR 0851559
(43) Date de publication de la demande: 16.09.2009
(73) Titulaire: Ingenico France, 92200 Neuilly Sur Seine (FR)
(72) Inventeur: DEMANGE, Fabien, 07500, GUILHERAND-GRANGES (FR)
(74) Mandataire: de Beaumont, Michel

(56) Documents cités:
- FR-A- 2 615 983
- FR-A- 2 875 634

## Description

### Domaine de l'invention

La présente invention concerne un terminal de paiement électronique comprenant un lecteur de cartes munies d'une piste magnétique, appelé lecteur magnétique.

### Exposé de l'art antérieur

Les terminaux de paiement électronique actuellement commercialisés sont généralement adaptés à la fois à la lecture de cartes à puce à lecture par contact et de cartes munies d'une piste magnétique, ou cartes magnétiques. Ils comprennent généralement un boîtier contenant un circuit imprimé auquel sont reliés des composants tels qu'un clavier, un écran d'affichage, un lecteur de cartes à puce à lecture par contact, un lecteur de cartes magnétiques, une imprimante, un module de modulation/démodulation de données destiné à être relié à un réseau d'échange de données, par exemple le réseau téléphonique, etc. Un tel terminal est décrit dans le document FR-A-2875634.

Le lecteur magnétique du terminal comprend une fente ouverte aux extrémités dans laquelle un utilisateur peut faire défiler une carte magnétique. Une tête de lecture magnétique affleure une paroi de la fente et permet la lecture de données stockées sur la piste magnétique de la carte magnétique et/ou l'écriture de données sur la piste magnétique de la carte magnétique lors du défilement de la carte magnétique dans la fente.

Le boîtier du terminal a une forme générale parallélépipédique et comprend des zones d'appui qui définissent un plan d'appui ou plan de référence, correspondant à une surface plane théorique sur laquelle serait posé le terminal. Les positions et les orientations des composants du terminal tels que le clavier ou l'écran d'affichage sont définies par rapport au plan de référence. Pour une utilisation classique du terminal, le plan de référence correspond généralement à un plan horizontal ou à un plan légèrement incliné par rapport à l'horizontale. Il existe principalement deux types d'orientations de la fente du lecteur magnétique pour le passage des cartes magnétiques : perpendiculairement ou parallèlement au plan de référence. Pour que le défilement de la carte magnétique dans la fente soit réalisé par un mouvement le plus naturel possible pour un utilisateur, il est généralement préférable que la fente s'étende le long d'un bord latéral du terminal perpendiculairement au plan de référence, c'est-à-dire généralement selon un plan vertical. Un tel lecteur magnétique est dit à fente verticale et latérale.

Pour certaines applications, il est souhaitable que l'utilisateur puisse tenir le terminal de paiement en main. Le terminal de paiement est alors qualifié de portable. Les standards actuels de sécurité des terminaux de paiement (PCI POS PED Derived Test Requirements) imposent que la largeur d'un terminal portable soit inférieure à 76,2 mm au niveau de la touche centrale (généralement la touche "5") du clavier et que la somme de l'épaisseur et de la largeur du terminal au niveau de cette même touche soit inférieure à 101,6 mm.

De façon générale, pour les terminaux de paiement qui ne sont pas portables, les contraintes de sécurité pour la réalisation d'opérations de paiement électronique imposent de munir le terminal de paiement d'un cache code permettant de dissimuler au moins partiellement la main d'un utilisateur lors de l'utilisation du clavier du terminal, par exemple pour composer un code confidentiel. Le cache code se compose, par exemple, d'une paroi qui entoure partiellement le clavier. Pour les terminaux de paiement portables, la présence d'un cache code n'est généralement pas obligatoire puisqu'on considère que le corps de l'utilisateur fait directement écran aux regards indiscrets.

Toutefois, pour certaines applications, un terminal de paiement portable peut être utilisé de façon classique en étant posé sur un socle ou sur un support sans être tenu en main par un utilisateur. Il est alors souhaitable que le terminal soit muni d'un cache code. Une difficulté apparaît lorsque le lecteur magnétique du terminal portable est à fente verticale et latérale. En effet, la largeur du terminal étant réduite, la fente s'étend à proximité du clavier. La présence d'un cache code peut alors gêner la manipulation de la carte magnétique par un utilisateur. En effet, lorsque l'utilisateur fait défiler la carte magnétique dans la fente, le pouce de l'utilisateur tend à buter contre les parois du cache code.

Une possibilité consiste à utiliser un cache code constitué d'un matériau souple et déformable. Ainsi, lorsque l'utilisateur fait défiler la carte magnétique, le cache code se déforme sous l'action du pouce de l'utilisateur. Toutefois, l'utilisation d'un tel terminal peut être perçue par un utilisateur comme étant désagréable. En outre, le contact entre les doigts de l'utilisateur et le cache code peut rendre irrégulier le défilement de la carte magnétique par rapport à la tête de lecture magnétique, ce qui n'est pas souhaitable.

### Résumé de l'invention

La présente invention vise un terminal de paiement, notamment un terminal de paiement portable, comprenant un clavier, un lecteur magnétique à fente latérale, et éventuellement un cache code, pour lequel, lorsque le cache code est présent, la manipulation de la carte magnétique par un utilisateur pour faire défiler la carte magnétique dans la fente n'est pas gênée par la présence du cache code.

Dans ce but, un aspect de la présente invention prévoit un terminal de paiement électronique comprenant un boîtier comportant une face supérieure, des faces latérales et des zones d'appui définissant un plan d'appui du côté d'une face inférieure, un clavier disposé au niveau de la face supérieure et un lecteur de cartes magnétiques comprenant une fente débouchante dans laquelle est destinée à défiler au moins une carte magnétique et s'étendant le long de l'une des faces latérales. La fente est conformée pour incliner la carte, au moins sur une partie du défilement de la carte dans la fente, entre 5 et 20 degrés par rapport à un plan perpendiculaire au plan d'appui de façon à l'éloigner du clavier.

Selon un exemple de réalisation de la présente invention, le terminal comprend, en outre, une tête de lecture magnétique disposée au niveau de la fente et adaptée à lire et/ou à écrire des données sur la piste magnétique lors d'un défilement de la carte dans la fente. La tête de lecture magnétique comprend au moins une fente de lecture, la fente de lecture étant inclinée entre 5 et 20 degrés par rapport au plan perpendiculaire au plan d'appui.

Selon un exemple de réalisation de la présente invention, la fente débouche à des première et seconde extrémités, le défilement de la carte dans la fente étant destiné à être réalisé depuis la première extrémité jusqu'à la seconde extrémité. La fente comprend, depuis la première extrémité, successivement une première portion convergente et une deuxième portion de section constante.

Selon un exemple de réalisation de la présente invention, la tête de lecture magnétique est disposée au niveau de la deuxième portion.

Selon un exemple de réalisation de la présente invention, la deuxième portion est suivie d'une troisième portion divergente jusqu'à la seconde extrémité.

Selon un exemple de réalisation de la présente invention, la fente est délimitée par des première et seconde parois latérales et par une paroi de fond, la seconde paroi étant plus éloignée du clavier que la première paroi. La première paroi se rapproche de la seconde paroi de la première extrémité jusqu'à la deuxième portion et s'éloigne de la première paroi de la deuxième portion jusqu'à la seconde extrémité.

Selon un exemple de réalisation de la présente invention, la première paroi est parallèle à la seconde paroi dans la deuxième portion.

Selon un exemple de réalisation de la présente invention, la seconde paroi correspond à une surface non plane, notamment une portion d'un cylindre dont l'axe est incliné entre 5 et 20 degrés par rapport au plan perpendiculaire au plan d'appui ou une portion conique.

Selon un exemple de réalisation de la présente invention, le terminal est portable.

Selon un exemple de réalisation de la présente invention, le terminal comprend, en outre, un cache code entourant au moins partiellement le clavier et comprenant une paroi entre le clavier et la fente se projetant depuis la face du boîtier et inclinée vers le clavier.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1 et 2 sont respectivement des vues en perspective de trois-quarts avant et de face d'un exemple de réalisation d'un terminal de paiement selon la présente invention ;
la figure 3 représente, de façon schématique, la forme de la fente du lecteur magnétique du terminal de paiement de la figure 1 pour le passage d'une carte magnétique ; et
les figures 4A, 4B et 4C sont des coupes schématiques de la figure 3.

### Description détaillée

Par souci de clarté, de mêmes éléments ont été désignés par de mêmes références aux différentes figures. Seuls les éléments nécessaires à la compréhension de la présente invention seront décrits.

Un exemple de réalisation de la présente invention prévoit une forme particulière de la fente du lecteur magnétique pour le passage de la carte magnétique de façon que, lors du défilement dans la fente de la carte magnétique manipulée par un utilisateur, la carte soit inclinée au moins localement par rapport à un plan perpendiculaire au plan de référence du terminal lorsque la carte passe à proximité du cache code. Ceci permet d'éloigner du cache code la tranche supérieure de la carte magnétique saisie par l'utilisateur. Le défilement de la carte magnétique dans la fente du lecteur magnétique peut alors être réalisé sans que le pouce ou les doigts de l'utilisateur ne viennent au contact du cache code.

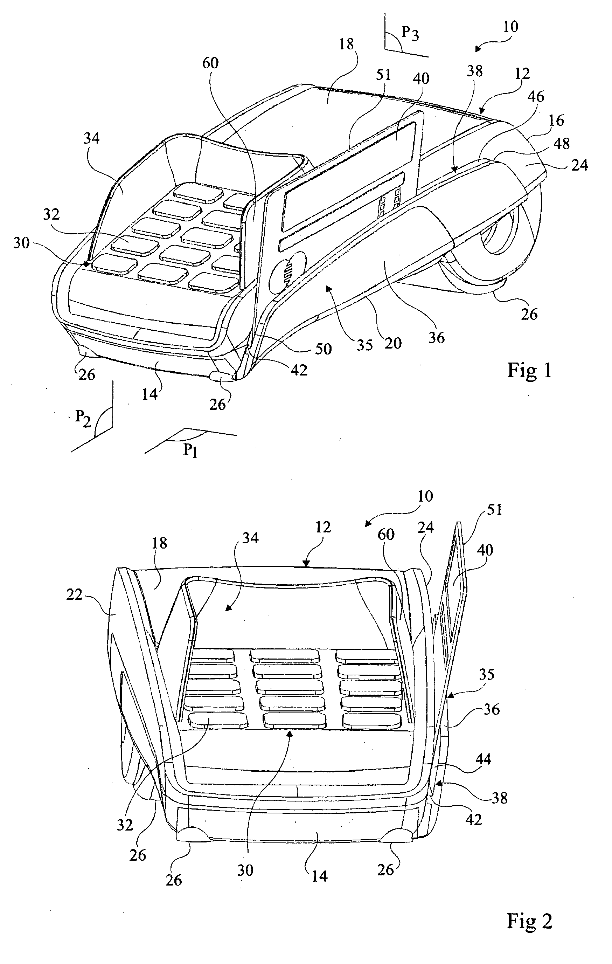

Les figures 1 et 2 représentent un exemple de réalisation d'un terminal de paiement 10 selon l'invention. Le terminal 10 comprend un boîtier 12. Le boîtier 12 comprend une face avant 14, une face arrière 16, une face supérieure 18, une face inférieure 20 et deux faces latérales 22, 24. Dans le présent exemple de réalisation, l'épaisseur du boîtier 12 croît sensiblement du bord avant 14 au bord arrière 16. La face inférieure 20 comprend des zones d'appui 26 qui définissent un plan de référence P₁. Le plan de référence P₁ correspond à la surface plane théorique sur laquelle serait posée le terminal 10. Le terminal 10 comprend un clavier 30 constitué de touches 32 réparties au niveau de la face supérieure 18 en rangées et en colonnes. Dans le présent exemple de réalisation, le clavier 30 est constitué de trois colonnes de touches. On appelle P₂ un plan perpendiculaire au plan de référence P₁ orienté sensiblement selon les colonnes du clavier 30 à mi-distance des faces latérales 22, 24 et on appelle P₃ le plan perpendiculaire aux plans P₁ et P₂ à mi-distance des faces avant et arrière 14, 16. Un cache code 34 entoure le clavier sur trois côtés. Le cache code 34 peut être fixé en permanence au boîtier 12 ou peut être relié de façon amovible au boîtier 12 et mis en place seulement lorsque cela est nécessaire. Selon le présent exemple de réalisation, le terminal 10 est un terminal portable pouvant être tenu en main par un utilisateur.

Le terminal de paiement 10 comprend un lecteur magnétique 35 comportant un guide 36 qui s'étend depuis la face latérale 24 et délimite une fente 38 avec la face latérale 24 pour le passage d'une carte magnétique 40. La fente 38 s'étend le long de la face latérale 24. La carte magnétique 40 comprend au moins une piste magnétique, non visible aux figures 1 et 2. Plus précisément, la fente 38 est délimitée par une paroi de fond 42, une paroi latérale 44 du côté du guide 36 et une paroi latérale 46 correspondant à une portion de la face latérale 24 du boîtier 12. La fente 38 est ouverte à ses deux extrémités opposées 48, 50. La carte magnétique 40 comprend une tranche supérieure 51 et une tranche inférieure, non visible sur les figures. Lorsqu'un utilisateur fait défiler la carte 40 dans la fente 38, il saisit la carte 40 au niveau de la tranche supérieure 51 et fait coulisser la tranche inférieure de la carte 40 sur la paroi de fond 42. Un dispositif, non représenté, peut être prévu au niveau de la paroi de fond 42 pour faciliter le coulissement de la carte 40 et en réduire l'usure.

Le lecteur magnétique 35 comprend une tête de lecture magnétique, non visible aux figures 1 et 2, contenue dans le boîtier 12 et qui affleure la paroi 46 de la fente 38. La tête de lecture magnétique est adaptée, lors du passage de la carte 40 dans la fente 38, à lire des données stockées sur la piste magnétique de la carte 40 et/ou à écrire des données sur la piste magnétique de la carte 40.

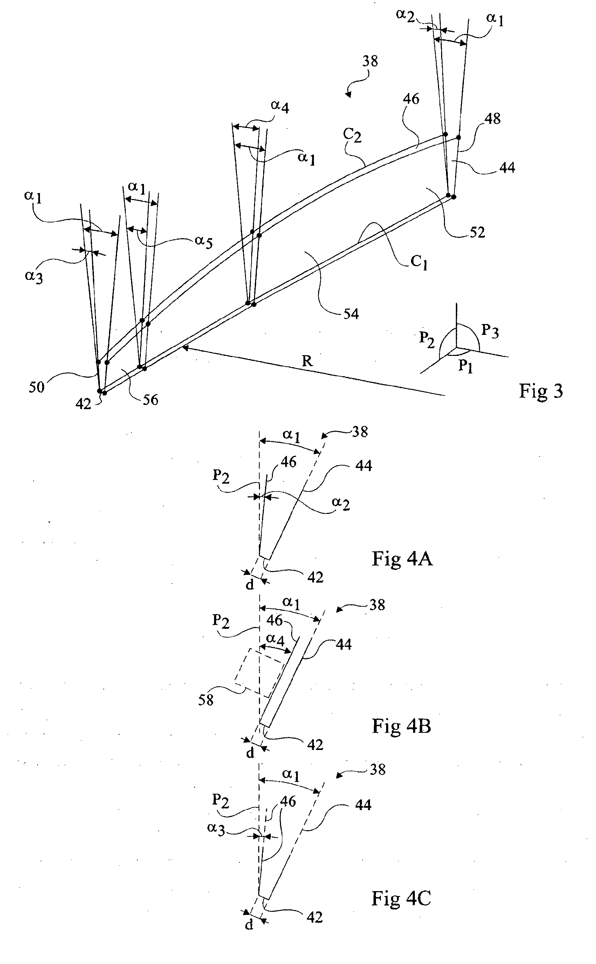

La figure 3 représente de façon schématique les parois 42, 44 et 46 de la fente 38. Dans le présent exemple de réalisation, le défilement de la carte 40 dans la fente 38 se fait depuis l'extrémité 48 de la fente 38 la plus proche de la face arrière 16 du boîtier 12, appelée extrémité d'entrée 48 de la fente 38, jusqu'à l'extrémité 50 de la fente 38 la plus proche de la face avant 14 du boîtier 12, appelé extrémité de sortie 50 de la fente 38.

Les figures 4A, 4B et 4C sont des coupes de la fente 38 de la figure 3 réalisées respectivement dans des plans parallèles au plan P₃, le plan de coupe de la figure 4A étant situé à proximité de l'extrémité d'entrée 48 de la fente 38, le plan de coupe de la figure 4C étant situé à proximité de l'extrémité de sortie 50 de la fente 38 et le plan de coupe de la figure 4B étant situé approximativement à mi-distance des extrémités 48 et 50.

La paroi latérale 44, la plus éloignée du clavier 30, correspond à une portion d'un cylindre de rayon R dont l'axe, non représenté, est contenu dans le plan P₃, est incliné par rapport au plan P₂ d'un angle α₁, dans le sens horaire lorsque le terminal 10 est vu de face et coupe le plan P1 en un point situé du côté opposé au boîtier 12 par rapport au guide 36. L'angle α₁ est compris entre 5 et 20 degrés, de préférence égal à une dizaine de degrés, par exemple égal à 10 degrés. Le rayon R, partiellement représenté en figure 3, est, par exemple, d'une ou de plusieurs centaines de centimètres, par exemple 1,5 mètre. Selon une variante du présent exemple de réalisation, la paroi latérale 44 correspond à une forme plus complexe qu'une portion cylindrique et correspond, par exemple, à une portion conique. La paroi de fond 42 correspond à une portion de couronne appartenant à un plan perpendiculaire à l'axe de la paroi latérale 44, autrement dit incliné d'un angle α₁ par rapport au plan P₁. La largeur d, mesurée dans le plan P₃, de la paroi de fond 42 est sensiblement constante sur toute la longueur de la fente 38 et varie entre 1 et quelques millimètres, par exemple 1,5 mm.

La paroi 46 est une surface de forme complexe. Elle est définie par une courbe C₁, correspondant à l'un des bords de la paroi de fond 42 et qui a la forme d'un arc de cercle sensiblement parallèle à la paroi 44, et par une courbe C₂ qui est sensiblement parallèle à la paroi 44 en partie centrale de la paroi 44 et qui s'éloigne de la paroi 44 au fur et à mesure que l'on s'approche de l'extrémité d'entrée 48 ou de l'extrémité de sortie 50 de la fente 38. Selon une variante de la présente invention, la courbe C₂ peut correspondre à un segment de droite. La fente 38 comprend donc successivement, de l'extrémité d'entrée 48 à l'extrémité de sortie 50, une portion convergente 52, une portion étroite 54 et une portion divergente 56. Dans la portion étroite 54, la largeur de la fente 38 peut être constante.

A proximité de l'extrémité d'entrée 48, comme cela apparaît en figure 4A, la paroi 46 forme un angle α₂ avec le plan P₂ compris entre 0 et quelques degrés, par exemple égal à 2 degrés. A proximité de l'extrémité de sortie 50, comme cela apparaît en figure 4A, la paroi 46 forme un angle α₃ avec le plan P₂ compris entre 0 et quelques degrés, par exemple égal à 2 degrés. Dans la portion étroite 54, comme cela apparaît en figure 4B, la paroi 46 forme un angle α₄ avec le plan P₂ d'une dizaine de degrés, par exemple sensiblement égal à α₁. La tête de lecture magnétique, représentée par des traits pointillés 58 en figure 4B est prévue au niveau de la portion étroite 54. La tête de lecture 58 est inclinée par rapport au plan P₁ de sorte que la fente de lecture de la tête de lecture 58 soit tangente à la paroi 46.

La portion convergente 52 de la fente 38 facilite l'introduction d'une carte 34 dans la fente 38 par un utilisateur, puisqu'elle autorise alors un débattement de la carte 40 dans la fente 38. La carte 40 peut être introduite dans la fente 38 en étant maintenue, de façon classique, sensiblement verticalement. Au fur et à mesure que la carte 40 progresse dans la fente 38, l'inclinaison croissante de la paroi 46 par rapport au plan P₂ fait s'incliner de plus en plus la carte 40 par rapport au plan P₂, de sorte que la tranche supérieure 51 de la carte est éloignée du cache code 34 dans la portion étroite 54 de la fente 38. Les doigts de l'utilisateur manipulant la carte 40 ne viennent alors pas au contact du cache code 34 lors du défilement de la carte 40 dans la fente 38. La tête de lecture magnétique 58 est disposée dans la portion étroite 54 de la fente 38 pour assurer un maintien convenable de la carte 40 lorsqu'elle défile au niveau de la tête de lecture magnétique 58. En outre, la forme circulaire de la paroi 40 améliore le plaquage de la carte 40 contre la tête de lecture magnétique 58. La portion divergente 56 de la sortie 50 de la fente 38 permet de relâcher les contraintes exercées sur la carte 40 au cours de son défilement dans la portion étroite 54 de la fente 38. L'inclinaison temporaire de la carte 40 au cours de son défilement dans la fente 38 est réalisée progressivement de façon qu'elle ne soit pas ou peu perçue par le manipulateur de la carte 40. Ceci permet d'utiliser le terminal 10 de façon analogue à un terminal de paiement électronique comprenant un lecteur magnétique à fente latérale et verticale.

La portion convergente 52 de la fente 38 peut être plus étendue que la portion divergente 56 par rapport à la longueur totale de la fente 38. En effet, la portion convergente 52 doit être suffisamment étendue pour faciliter l'introduction de la carte 40 dans la fente 38. Au niveau de l'extrémité de sortie 50, la hauteur de la fente 38 peut être réduite, notamment pour des raisons esthétiques. Dans ce cas, il peut être souhaitable que la portion divergente 56 ne soit pas trop étendue pour que la carte 40 reste maintenue correctement (une partie de la carte 40 pouvant toujours se trouver au niveau de la tête de lecture 58).

Le cache code 34 peut comprendre une paroi 60 latérale, du côté de la fente 38, qui est inclinée par rapport au plan P₂ de façon que le bord supérieur de la paroi 60 s'éloigne de la fente 38. Ceci permet d'éviter encore davantage tout contact entre le cache code 34 et les doigts d'un utilisateur lors du défilement de la carte 40 dans la fente 38.

Des modes de réalisation particuliers de la présente invention ont été décrits. Diverses variantes et modifications apparaîtront à l'homme de l'art. En particulier, dans l'exemple de réalisation de la présente invention décrit précédemment, la paroi 44 correspond à une portion cylindrique. Toutefois, selon une variante, la paroi 44 peut être une paroi plane inclinée par rapport au plan P₂.

## Revendications

1. Terminal de paiement électronique (10) comprenant :
un boîtier (12) comportant une face supérieure (18), des faces latérales (22, 24) et des zones d'appui (26) définissant un plan d'appui (P₁) du côté d'une face inférieure (20) ;
un clavier (30) disposé au niveau de la face supérieure ; et
un lecteur (35) de cartes magnétiques comprenant une fente débouchante (38) dans laquelle est destinée à défiler au moins une carte magnétique (40) et s'étendant le long de l'une des faces latérales ;
**caractérisé en ce que** la fente est conformée pour incliner la carte, au moins sur une partie du défilement de la carte dans la fente, entre 5 et 20 degrés par rapport à un plan (P₂) perpendiculaire au plan d'appui de façon à l'éloigner du clavier.

2. Terminal selon la revendication 1, comprenant, en outre, une tête de lecture magnétique (58) disposée au niveau de la fente (38) et adaptée à lire et/ou à écrire des données sur la piste magnétique lors d'un défilement de la carte dans la fente, la tête de lecture magnétique (58) comprenant au moins une fente de lecture, la fente de lecture étant inclinée entre 5 et 20 degrés par rapport au plan (P₂) perpendiculaire au plan d'appui (P₁).

3. Terminal selon la revendication 1 ou 2, dans lequel la fente (38) débouche à des première et seconde extrémités (48, 50), le défilement de la carte (40) dans la fente étant destiné à être réalisé depuis la première extrémité jusqu'à la seconde extrémité, la fente comprenant, depuis la première extrémité, successivement une première portion convergente (52) et une deuxième portion (54) de section constante.

4. Terminal selon les revendications 2 et 3, dans lequel la tête de lecture magnétique (58) est disposée au niveau de la deuxième portion (54).

5. Terminal selon la revendication 3 ou 4, dans lequel la deuxième portion (54) est suivie d'une troisième portion divergente (56) jusqu'à la seconde extrémité (50).

6. Terminal selon l'une quelconque des revendications 3 à 5, dans lequel la fente (38) est délimitée par des première et seconde parois latérales (44, 46) et par une paroi de fond (42), la seconde paroi (44) étant plus éloignée du clavier (30) que la première paroi (46), la première paroi se rapprochant de la seconde paroi de la première extrémité (48) jusqu'à la deuxième portion (54) et s'éloignant de la première paroi de la deuxième portion jusqu'à la seconde extrémité (50).

7. Terminal selon la revendication 6, dans lequel la première paroi (46) est parallèle à la seconde paroi (44) dans la deuxième portion (54).

8. Terminal selon la revendication 6 ou 7, dans lequel la seconde paroi (44) correspond à une surface non plane, notamment une portion d'un cylindre dont l'axe est incliné entre 5 et 20 degrés par rapport au plan (P₂) perpendiculaire au plan d'appui (P₁) ou une portion conique.

9. Terminal selon l'une quelconque des revendications 1 à 8, dans lequel le terminal est portable.

10. Terminal selon l'une quelconque des revendications 1 à 9, comprenant, en outre, un cache code (34) entourant au moins partiellement le clavier (30) et comprenant une paroi (60) entre le clavier (30) et la fente (38) se projetant depuis la face (18) du boîtier (12) et inclinée vers le clavier.

## Patentansprüche

1. Ein elektronisches Bezahlendgerät (10), wobei das Endgerät Folgendes aufweist:
ein Paket (12) mit einer oberen Fläche (18), seitlichen Flächen (22, 24) und Lagerbereichen (26), die eine Lagerebene (P₁) an der Seite einer unteren Fläche (20) definieren;
eine Tastatur (30), die in Höhe der oberen Fläche angeordnet ist; und
einen Magnetkartenleser (35), der einen offenen Schlitz (38) aufweist, durch den wenigstens eine Magnetkarte (40) gezogen werden soll und der sich entlang einer der seitlichen Flächen erstreckt;
**dadurch gekennzeichnet, dass** der Schlitz so geformt ist, dass er die Karte kippt, wenigstens teilweise beim Gleiten der Karte durch den Schlitz, um 5 bis 20 Grad bezüglich einer Ebene (P₂), die senkrecht zu der Lagerebene ist, um die Karte von der Tastatur wegzuziehen.

2. Das Endgerät nach Anspruch 1, wobei das Endgerät ferner einen Magnetlesekopf (58) aufweist, der in der Höhe des Schlitzes (38) angeordnet ist und geeignet ist Daten von dem Magnetstreifen zu lesen und/oder Daten auf den Magnetstreifen zu schreiben während eines Gleitens der Karte durch den Schlitz, wobei der Magnetlesekopf (58) wenigstens einen Leseschlitz aufweist, wobei der Leseschlitz um 5 bis 20 Grad bezüglich der Ebene (P₂) geneigt ist, die senkrecht zu der Lagerebene (P₁) ist.

3. Das Endgerät nach Anspruch 1 oder 2, wobei sich der Schlitz (38) an ersten und zweiten Enden (48, 50) öffnet, wobei das Gleiten der Karte (40) in dem Schlitz von dem ersten Ende zu dem zweiten Ende ausgeführt werden soll und wobei der Schlitz von dem ersten Ende weiterhin einen ersten konvergierenden Teil (52) aufweist und einen zweiten Teil (54) mit konstantem Querschnitt.

4. Das Endgerät nach Anspruch 2 und 3, wobei der Magnetlesekopf (58) in der Höhe des zweiten Teils (54) angeordnet ist.

5. Das Endgerät nach Anspruch 3 oder 4, wobei auf den zweiten Teil (54) ein dritter Teil (56) folgt, der auf der gesamten Strecke bis zu dem zweiten Ende (50) divergiert.

6. Das Endgerät nach einem der Ansprüche 3 bis 5, wobei der Schlitz (38) durch erste und zweite seitliche Wände (44, 46) und durch eine Rückwand (42) begrenzt ist, wobei die zweite Wand (44) weiter von der Tastatur (30) entfernt ist als die erste Wand (46), wobei die erste Wand von dem ersten Ende (48) aus zu dem zweiten Teil (54) sich an die zweite Wand annähert und sich von dem zweiten Teil zu dem zweiten Ende (50) von der ersten Wand entfernt.

7. Das Endgerät nach Anspruch 6, wobei die erste Wand (46) parallel zu der zweiten Wand (44) in dem zweiten Teil (54) ist.

8. Das Endgerät nach Anspruch 6 oder 7, wobei die zweite Wand (44) einer nicht ebenen Fläche entspricht, vorzugsweise einem Teil eines Zylinders oder einem konischen Teil, bei dem die Achsen des Zylinders um 5 bis 20 Grad bezüglich der Ebene (P₂) geneigt sind, die senkrecht zu der Lagerebene (P₁) ist.

9. Das Endgerät nach einem der Ansprüche 1 bis 8, wobei das Endgerät tragbar ist.

10. Das Endgerät nach einem der Ansprüche 1 bis 9, wobei das Endgerät ferner einen Code-Cache (34) aufweist, der wenigstens teilweise die Tastatur (30) umgibt und eine Wand (60) zwischen der Tastatur (30) und dem Schlitz (38) aufweist, die von der Fläche (18) des Pakets (12) herausragt und in Richtung der Tastatur geneigt ist.

## Claims

1. An electronic payment terminal (10) comprising:
a package (12) having an upper surface (18), lateral surfaces (22, 24), and bearing areas (26) defining a bearing plane (P₁) on the side of a lower surface (20);
a keyboard (30) arranged at the upper surface level; and
a magnetic card reader (35) comprising an open-ended slot (38) into which at least one magnetic card (40) is intended to slide and extending along one of the lateral surfaces;
**characterized in that** the slot is shaped to incline the card, at least along part of the sliding of the card in the slot, by from 5 to 20 degrees with respect to a plane (P₂) perpendicular to the bearing plane to draw it away from the keyboard.

2. The terminal of claim 1, further comprising a magnetic read head (58) arranged at the level of the slot (38) and capable of reading and/or of writing data from or onto the magnetic track during a sliding of the card in the slot, the magnetic read head (58) comprising at least one read slot, the read slot being inclined by from 5 to 20 degrees with respect to the plane (P₂) perpendicular to the bearing plane (P₁).

3. The terminal of claim 1 or 2, wherein the slot (38) emerges at first and second ends (48, 50), the sliding of the card (40) in the slot being intended to be performed form the first end to the second end, the slot comprising, from the first end, successively a first converging portion (52) and a second portion (54) of constant cross-section.

4. The terminal of claims 2 and 3, wherein the magnetic read head (58) is arranged at the level of the second portion (54) .

5. The terminal of claim 3 or 4, wherein the second portion (54) is followed by a third portion (56) diverging all the way to the second end (50).

6. The terminal of any of claims 3 to 5, wherein the slot (38) is delimited by first and second lateral walls (44, 46) and by a back wall (42), the second wall (44) being more distant from the keyboard (30) than the first wall (46), the first wall drawing closer to the second wall from the first end (48) to the second portion (54) and drawing away from the first wall from the second portion to the second end (50).

7. The terminal of claim 6, wherein the first wall (46) is parallel to the second wall (44) in the second portion (54).

8. The terminal of claim 6 or 7, wherein the second wall (44) corresponds to a non-planar surface, particularly a portion of a cylinder having its axis inclined by from 5 to 20 degrees with respect to the plane (P₂) perpendicular to the bearing plane (P₁) or a conical portion.

9. The terminal of any of claims 1 to 8, wherein the terminal is portable.

10. The terminal of any of claims 1 to 9, further comprising a code cache (34) at least partially surrounding the keyboard (30) and comprising a wall (60) between the keyboard (30) and the slot (38) projecting from the surface (18) of the package (12) and inclined towards the keyboard.
